## Europäisches Patentamt

## European Patent Office

## Office européen des brevets

(19)

(11) Numéro de publication: **0 239 427**
**B1**

(12)
# FASCICULE DE BREVET EUROPEEN

(45) Date de publication du fascicule du brevet:
**17.05.89**

(51) Int. Cl.⁴: **F16D 3/20**

(21) Numéro de dépôt: **87400250.4**

(22) Date de dépôt: **03.02.87**

(54) **Joint de transmission homocinétique pour véhicules automobiles.**

(30) Priorité: **20.02.86 FR 8602322**

(43) Date de publication de la demande:
**30.09.87 Bulletin 87/40**

(45) Mention de la délivrance du brevet:
**17.05.89 Bulletin 89/20**

(84) Etats contractants désignés:
**DE ES GB IT**

(56) Documents cités:
**FR-A- 2 133 042**
**FR-A- 2 525 306**
**FR-A- 2 582 760**
**GB-A- 916 297**
**US-A- 1 942 578**

(73) Titulaire: **GLAENZER SPICER, 10 Rue J.P. Timbaud,
F-78301 Poissy(FR)**

(72) Inventeur: **Orain, Michel Alexandre, 10, rue des Côtes de
Vannes, F-78700 Conflans Ste Honorine(FR)**

(74) Mandataire: **Moncheny, Michel et al, c/o Cabinet
Lavoix 2 Place d'Estienne d'Orves, F-75441 Paris
Cedex 09(FR)**

## Description

La présente invention a pour objet un joint de transmission homocinétique pour véhicules automobiles du type visé au préambule de la revendication 1, connu par le FR-A 2 525 306.

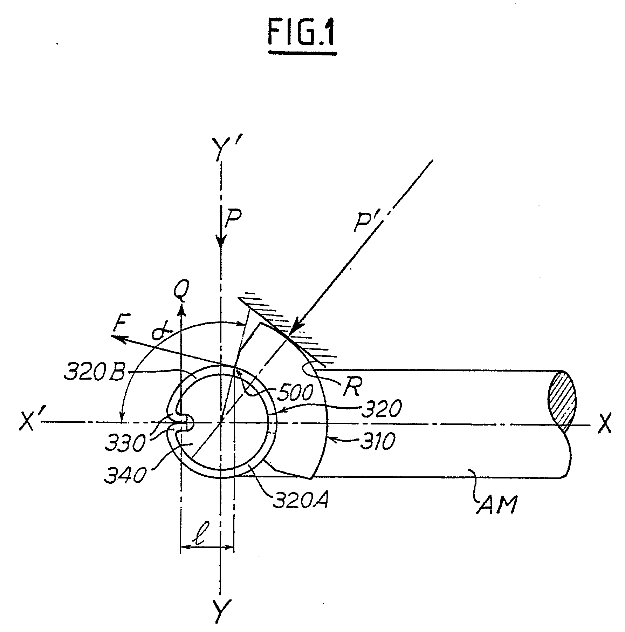

On connaît un joint de transmission homocinétique, partiellement représenté à la Figure 1 annexée, qui comporte un organe mâle susceptible d'être entraîné en rotation par un arbre menant AM et pourvu de bras ou tourillons radiaux 340, par exemple au nombre de trois formant un tripode. Sur chaque bras 340 est monté un élément de roulement constitué par deux secteurs séparés dont l'un seulement 310 a été représenté à la Figure 1, et qui coopèrent chacun avec un chemin de roulement R ménagé dans un organe femelle (barillet 312) solidaire en rotation d'un arbre mené (non représenté).

Des coussinets élastiques expansibles sont interposés entre les bras 340 et les secteurs de roulement 310, chaque coussinet 320 étant formé par deux demi-coussinets cylindriques 320A et 320B, équipés chacun d'un bord terminal recourbé 330 constituant un point d'ancrage engagé dans un trou ménagé radialement dans le bras 340. Les demi-coussinets 320A, 320B sont élastiques et adaptés pour pouvoir s'expanser radialement par pincement du bras associé 340 entre leurs extrémités.

Le trou usiné dans le bras 340 et qui reçoit le point d'ancrage constitué par le bord recourbé 330 est déphasé angulairement de 90° relativement à la direction moyenne Y–Y' de la charge P appliquée au coussinet 320. Or, dans le cas où l'angularité du joint est maximum, lorsque le segment de roulement 310 tourillonnant sur le coussinet 320 se trouve dans sa position extrême et amorce sa course de retour, la force P s'est déplacée en P' et le coussinet 320 est découvert d'un arc $\alpha$ excédant 90°. Une force de frottement F apparaît alors au point 500 situé à l'intersection de la surface intérieure du segment de roulement 310 et du demi-coussinet correspondant 320B. Cette force F tend à entraîner le demi-coussinet 320B en rotation et provoque l'apparition d'une réaction Q appliquée au bord terminal d'indexage 330.

$l$ étant la distance entre le point 500 et le point d'application de la réaction Q, il en résulte un moment de flexion $Ql$ au point 500 dans le demi-coussinet 320B, qui fléchit en modifiant sa courbure dans sa zone d'entrée sous le segment 310. Cette modification de courbure accroît exagérément la pression locale dans cette zone 500 et détruit le film de lubrifiant, ce qui amorce un début de grippage entre le segment 310 et le demi-coussinet 320B. Corrélativement, l'effort de retenue de l'extrémité d'indexage 330 s'accroît brutalement, de même que la flexion, ce qui peut provoquer la rupture du demi-coussinet 320B au point 500.

L'invention a donc pour but de réaliser un coussinet radialement expansible, pour un joint homocinétique du type ci-dessus et qui soit capable de fonctionner dans toutes les configurations dans d'excellentes conditions de fiabilité, sans risque de rupture sous angularité maximum.

La présente invention vise également un outillage de fabrication industrielle de ces coussinets, ainsi que leur assemblage rationnel sur les tourillons du joint homocinétique, de manière à ce que leur fonctionnement soit également satisfaisant pour toutes les valeurs du couple à transmettre en permettant la formation et la conservation du film lubrifiant.

Conformément à la présente invention, chaque demi-coussinet est pourvu d'un plot d'indexage sur le bras associé, situé intérieurement audit demi-coussinet sur son axe de symétrie, et sollicité par un organe de rappel élastique des demi-coussinets vers leur position expansée.

Ainsi, le point d'ancrage de chaque demi-coussinet étant déplacé de son extrémité à sa zone centrale, il ne peut plus se produire d'accroissement brutal de l'effort de retenue de l'organe d'indexage lorsque le joint est sous angularité maximum. De ce fait, l'apparition du moment de flexion susceptible de provoquer alors la rupture du demi-coussinet est exclue, et ainsi les coussinets peuvent fonctionner en toute fiabilité dans toutes les configurations du joint, y compris sous angularité maximum.

Suivant un mode de réalisation de l'invention, chaque plot est soudé sur la surface intérieure du demi-coussinet associé dans la zone centrale de celui-ci, et engagé à coulisse dans un alésage du bras ménagé perpendiculairement à l'axe de ce dernier et coaxial à l'axe de symétrie des demi-coussinets, et un organe de rappel élastique des demi-coussinets vers leur position expansée est logé dans cet alésage, qui traverse le bras de part en part.

L'outillage également visé par l'invention est adapté à la fabrication par filage à froid de demi-coussinets dont les plots sont évidés en forme de godets, et comprend une matrice ainsi qu'un poinçon de filage d'une ébauche.

Suivant l'invention, une entaille à fond cylindrique est ménagée dans la matrice et le poinçon présente un contour cylindrique conjugué dans lequel est formé un évidement annulaire central complémentaire de la configuration du plot à filer, placé en appui dans l'entaille de la matrice. La revendication 9 mentionne dans le préambule les caractéristiques connues de l'outillage de fabrication selon US-A 1 942 578.

D'autres particularités et avantages de l'invention apparaîtront au cours de la description qui va suivre, faite en référence aux dessins annexés qui en illustrent plusieurs formes de réalisation à titre d'exemples non limitatifs :

— la Figure 1 est une vue en élévation partielle d'un joint homocinétique connu, du type visé par l'invention;

— la Figure 2 est une vue en coupe transversale suivant II–II de la Figure 3 du tripode d'un joint de transmission homocinétique du type de celui de la Figure 1 et équipé de coussinets expansibles suivant une première forme de réalisation de l'invention;

— la Figure 3 est une vue mi-coupe axiale, mi-élévation du tripode et de l'arbre menant correspondant suivant III–III de la Figure 2;

— la Figure 4 est une vue en coupe transversale d'un bras du tripode des Figures 2 et 3 suivant IV–

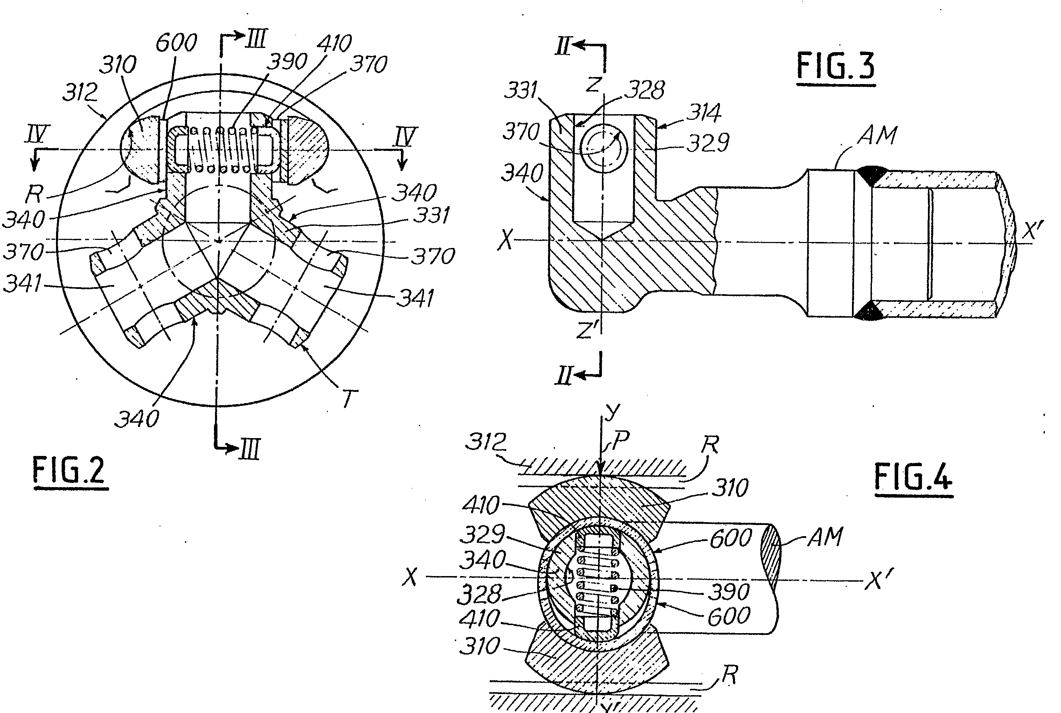

IV de la Figure 2 dans un plan parallèle à l'axe général du joint homocinétique;

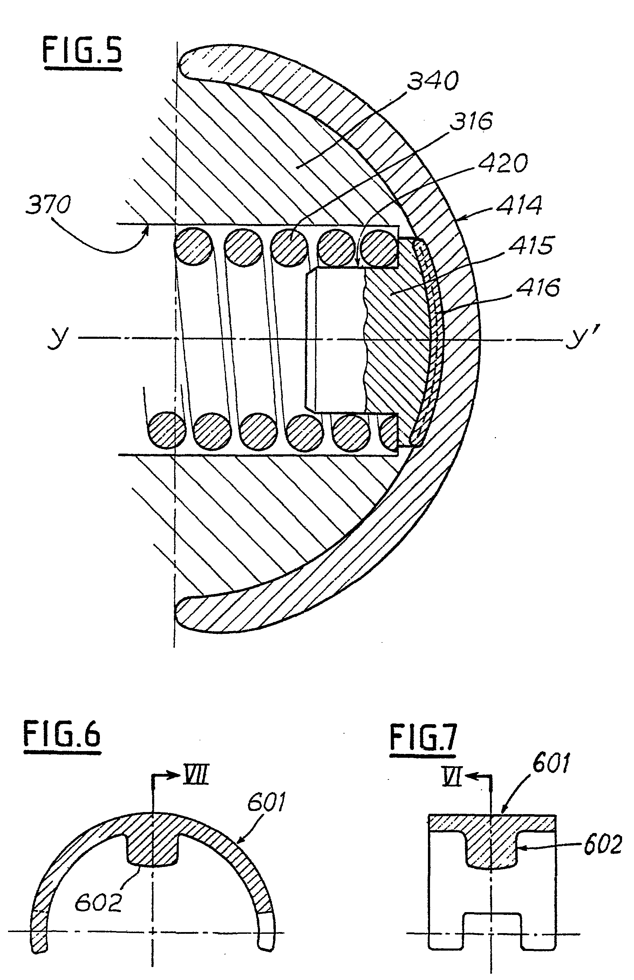

– la Figure 5 est une demi-vue en coupe transversale à échelle agrandie d'un bras d'un tripode du joint équipé d'un demi-coussinet selon un second mode de réalisation;

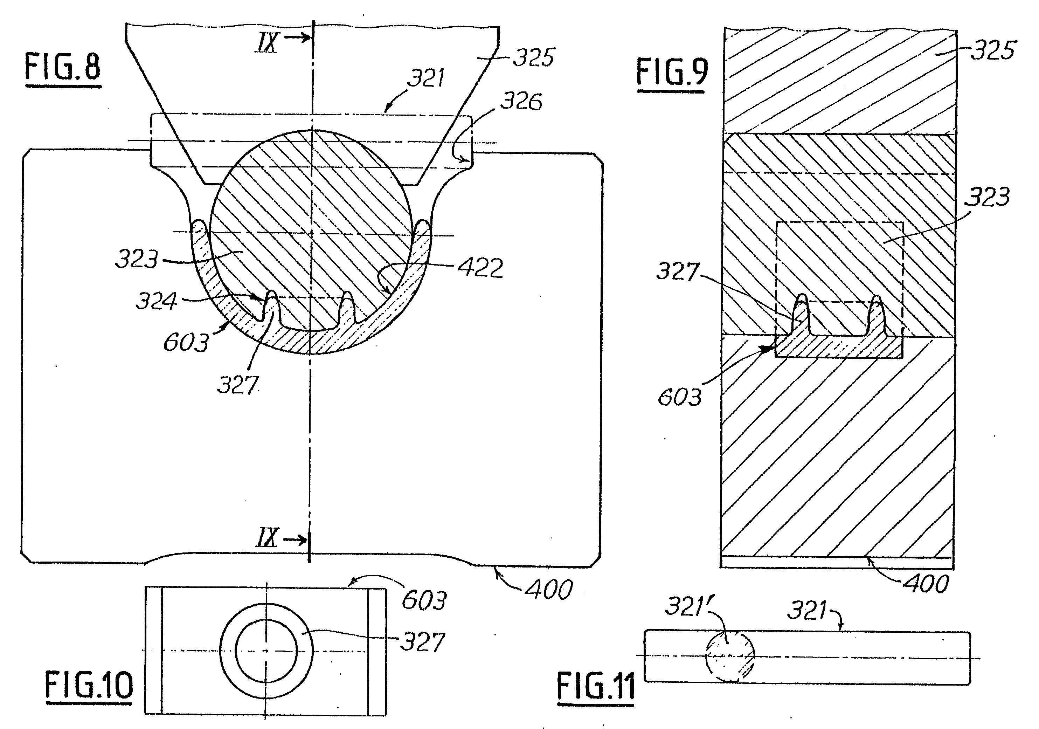

– la Figure 6 est une vue en coupe longitudinale suivant VI de la Figure 7 d'un troisième mode de réalisation du demi-coussinet selon l'invention;

– la Figure 7 est une vue mi-coupe, mi-élévation suivant VII de la Figure 6;

– la Figure 8 est une vue en élévation avec coupe partielle d'un outillage de fabrication de demi-coussinets conformes à l'invention;

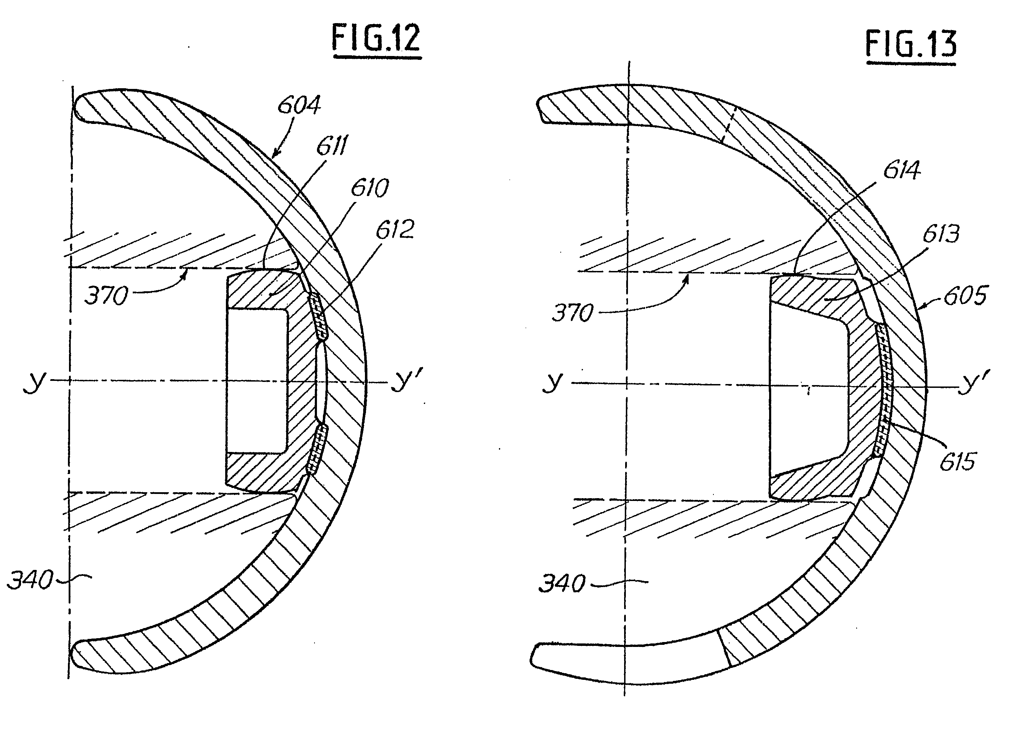

– la Figure 9 est une vue en coupe transversale suivant IX–IX de la Figure 8;

– la Figure 10 est une vue en élévation du demi-coussinet visible aux Figures 8 et 9;

– la Figure 11 est une vue en élévation d'une ébauche à partir de laquelle est obtenu le demi-coussinet de la Figure 10 par mise en oeuvre de l'outillage des Figures 8 et 9;

– les Figures 12 et 13 sont des demi-vues en coupe transversale d'un bras du tripode et de deux autres formes d'exécution d'un demi-coussinet associé celui-ci;

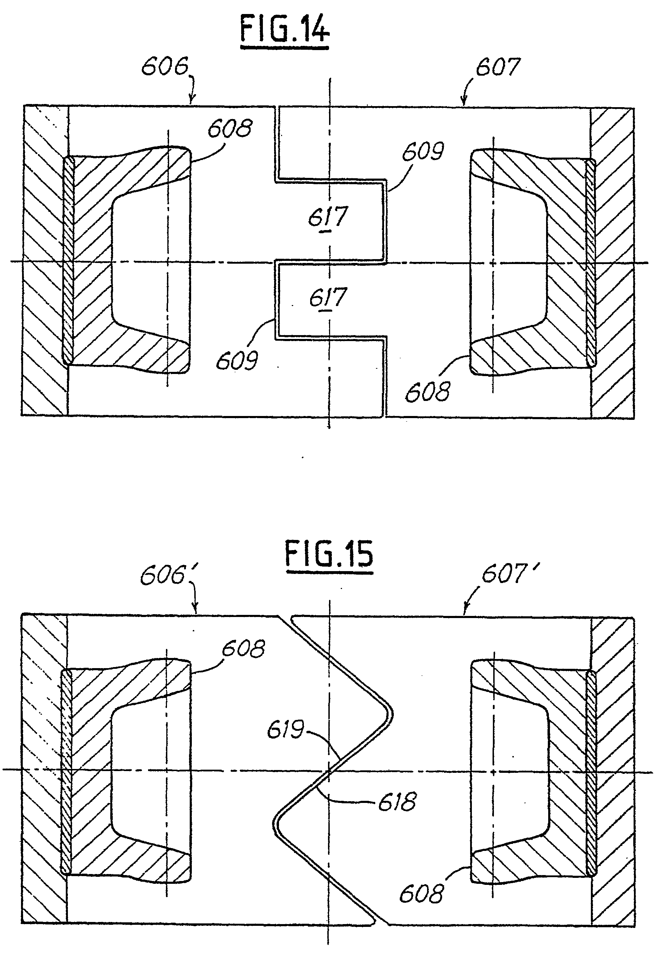

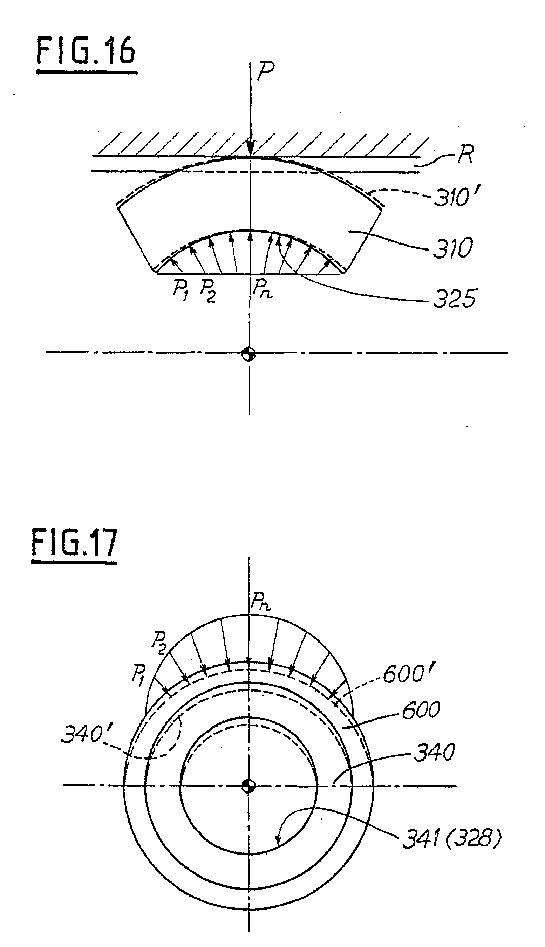

– les Figures 14 et 15 sont des vues en élévation latérale de deux autres variantes de réalisation de deux coussinets associés à un même bras du tripode, montrant en coupe les plots d'indexage correspondant dans un plan contenant l'axe du bras;

– la Figure 16 est une vue de dessus d'un segment de roulement associé à un bras du tripode du joint visé par l'invention, illustrant la répartition des forces exercées par ce bras sur le segment;

– la Figure 17 est une vue de dessus en plan schématique d'un bras et du coussinet associé, avec illustration de la répartition des forces exercées sur le coussinet et le bras par le segment de roulement correspondant.

Dans le premier mode de réalisation du joint illustré aux Figures 2 à 4, celui-ci comporte un arbre menant A M pourvu d'un tripode terminal T constitué de trois bras radiaux 340 chacun équipés de deux segments de galets 310 roulant sur des pistes R ménagées dans le barillet 312, un perçage axial 341 étant formé dans chaque bras 340. Les bras 340 sont respectivement munis de deux demi-coussinets semi-cylindriques 600 entourant le bras associé 340 et radialement expansibles de part et d'autre de celui-ci.

Suivant l'invention, chaque demi-coussinet 600 est pourvu d'un plot 410 d'indexage sur le bras associé 340, situé intérieurement au demi-coussinet 600 sur son axe de symétrie Y–Y' (Figure 4). Dans ce mode de réalisation, chaque plot d'indexage 410 présente la forme d'un godet ou d'une cuvette, et est soudé par sa surface extérieure cylindrique à la surface intérieure du demi-coussinet correspondant 600 dans la zone centrale de celui-ci. De plus, chaque plot 410 est engagé à coulisse dans un alésage 370 cylindrique dans l'exemple décrit, intérieur au bras 340 et ménagé perpendiculairement à l'axe Z–Z' de ce dernier et à l'axe X–X' de l'arbre A M du joint homocinétique. Chaque alésage transversal 370 contient un organe de rappel élastique des deux demi-coussinets 410 vers leur position expansée autour du tourillon 340, cet organe de rappel étant constitué dans l'exemple décrit par un ressort hélicoïdal 390 en appui par ses extrémités sur le pourtour des godets 410. La soudure de ces derniers sur les demi-coussinets 600 peut être exécutée par toute technique connue, par exemple décharge électrique, bombardement électronique, laser, friction, etc. Il convient enfin de noter que la surface latérale 420 des plots 410 est cylindrique afin d'éviter tout risque de coincement dans l'alésage 370 lors de l'expansion radiale des demi-coussinets 600, cette surface latérale pouvant être également sphérique comme dans une variante de réalisation qui sera décrite plus loin.

L'expansion radiale des demi-coussinets 600 a pour but de résorber le jeu entre la surface 314 des tourillons 340 et les segments de galets 310 roulant sur les chemins R.

On remarque également que dans la réalisation de la Figure 2, les perçages axiaux 341 des bras 340 s'étendent sur toute la longueur de ceux-ci et débouchent ensemble au centre du tripode T, alors que dans la variante des Figures 3 et 4, ces perçages ouverts 341 sont remplacés par des alésages borgnes 328. Les alésages 341 et 328 confèrent aux bras 340 une certaine souplesse élastique radiale leur permettant de s'ovaliser sous l'effet de la charge P reçue des segments de galets 310, par l'intermédiaire des demi-coussinets 600. L'épaisseur des parois 329 et 331 des bras 340 est telle que l'accroissement du rayon de courbure sous charge de ces parois corresponde à l'augmention du rayon de courbure des segments de galets correspondants 310.

Cette particularité de l'invention a pour avantage de permettre de conserver une coïncidence de courbure entre les surfaces de glissement du segment 310 et du demi-coussinet 600 (rapport de conformité) et d'assurer les meilleures conditions de formation du film de lubrifiant. On évite également de la sorte le phénomène d'écrasement du film de lubrifiant à l'entrée sous le segment 310 en 500 (Figure 1) lorsque ce segment 310 est en position d'angularité extrême. En effet, (voir Figure 16) l'effort P d'appui du segment torique 310 sur le chemin de roulement R est transféré par l'alésage 325 du segment 310 sur la surface de glissement du demi-coussinet 600, sous la forme d'une pression $p_1$, $p_2$....$p_n$ variable dans le film de lubrifiant, distribuée sur la surface de l'alésage 325 approximativement comme représenté à la Figure 16, en décroissant de part et d'autre de la direction de la charge P.

Il en résulte que le segment 310 a tendance à s'ouvrir en flexion comme représenté en traits interrompus 310'. En contrepartie, comme on le voit à la Figure 17, le tourillon tubulaire 340 est soumis, par l'intermédiaire du demi-coussinet 600, à cette même pression P distribuée angulairement comme indiqué par les flèches $P_1$, $P_2$...$P_n$, et a tendance s'ovaliser en prenant la configuration 340' représentée en traits mixtes, tandis que le coussinet 600 prend corrélativement la configuration ovalisée 600'.

Pour que la distribution de pression soit optimum pour toutes les valeurs prises par l'effort P, il suffit de dimensionner l'alésage 341 (ou 328) du tourillon 340 pour que les rayons de courbure des alésages 325 du segment 310 et de la portée du coussinet correspondant 600 varient dans la même proportion, pour des charges P quelconques correspondant aux couples d'utilisation du joint homocinétique.

Dans la forme de réalisation représentée à la Figure 5, le coussinet 414 est muni d'un plot massif ou pion 415 présentant une surface extérieure cylindrique solidarisée avec le demi-coussinet 414 par un cordon de soudure 416. Le pion 415 est centré par sa surface latérale cylindrique 420 à l'intérieur d'un ressort hélicoïdal 316 en fil rond ou carré, lui-même guidé à l'intérieur d'un alésage transversal 370 du tourillon 340, lequel est ici dépourvu d'alésage axial.

Les Figures 6 et 7 montrent une autre forme d'exécution du demi-coussinet 601, dans laquelle son plot d'indexage 602 est massif et fait partie intégrante du demi-coussinet 601 avec lequel il est donc venu de matière. Ce dernier peut être obtenu en métal fritté, ou par formage à froid d'acier, de laiton ou de tous autres métaux aptes au glissement.

Les Figures 8 à 11 illustrent une autre forme de réalisation du demi-coussinet 603, qui est ici muni d'un plot central d'indexage 327 évidé en forme de cuvette ou de godet et venu de matière avec le reste du demi-coussinet 603, ainsi que, représenté schématiquement, l'outillage de fabrication de ce demi-coussinet par filage à froid.

Cet outillage comprend une matrice 400 dans laquelle est ménagée une entaille 422 à fond cylindrique, et un poinçon 323 fixé à un porte-poinçon 325, le poinçon 323 présentant un contour cylindrique conjugué de l'entaille 422 et dans lequel est agencé un évidement annulaire central 324 complémentaire de la configuration de plot 603 à filer. Le porte-poinçon 325 transmet à la matrice 400 l'effort fourni par un piston de presse réalisé de façon connue en soi et non représenté.

Avant le formage proprement dit, l'ébauche de départ est une billette 321 en acier convenablement recuit, posée sur la matrice 400 entre deux encoches supérieures 326 délimitant l'entaille 422. Lors de la descente du poinçon 323, la billette 321 est d'abord courbée en fer à cheval, puis aplatie ainsi que son excroissance 321' sous forte pression, et le métal vient se loger dans l'espace annulaire 324, en formant le plot central 327 d'indexage du demi-coussinet 603, ce dernier prenant la configuration visible à la Figure 10 à la fin de l'opération de formage.

Cet outillage et sa mise en œuvre présentent les avantages suivants: grande solidité et fiabilité des coussinets 603 et des plots d'indexage 327, surface de glissement polie et glacée, coût de fabrication réduit, très bonne géométrie de la surface de glissement.

La Figure 12 montre une variante de réalisation du coussinet 604 dans laquelle celui-ci est muni d'un plot d'indexage 610 en forme de cuvette ou godet, à surface latérale 611 cylindrique pouvant glisser dans l'alésage transversal 370 du bras 340. Le plot 610 est soudé à la surface intérieure du demi-coussinet 604 par une surface annulaire 612 située dans la zone centrale du demi-coussinet et sensiblement coaxiale à son axe Y–Y'.

La Figure 13 montre une autre variante dans laquelle le demi-coussinet 605 est pourvu intérieurement d'un plot d'indexage 613 en forme de godet ayant une surface latérale dont seule la partie 614 la plus proche de l'axe du bras 340 est cylindrique et peut glisser sur la surface de l'alésage interne 370. Le plot 613 présente, en vis-à-vis du demi-coussinet 605, une excroissance centrale ou bossage 615, cylindrique et soudé à la surface intérieure du demi-coussinet 605.

Les Figures 14 et 15 illustrent deux autres modes de réalisation des demi-coussinets selon l'invention, dans lesquels les extrémités en vis-à-vis de deux coussinets montés sur un même bras sont profilées de manière à s'emboîter mutuellement en délimitant des surfaces de guidage. Ainsi, dans la variante de la Figure 14, les deux demi-coussinets associés 606, 607 pourvus de plots 608 en forme de godets soudés à la paroi intérieure des demi-coussinets respectifs, comportent des extrémités dans lesquelles sont ménagés des créneaux 609 recevant des languettes conjuguées 617, chaque extrémité étant pourvue d'une languette 617 et d'un créneau 609.

Dans la variante de la Figure 15, les demi-coussinets 606', 607' ont leurs extrémités pourvues de chevrons complémentaires 618, 619. Dans les deux cas, les extrémités des demi-coussinets ainsi convenablement profilées assurent un guidage mutuel de ceux-ci et une surface d'appui continue pour le segment de roulement lors de l'expansion radiale des demi-coussinets.

Les coussinets conformes à l'invention peuvent être réalisés, comme déjà indiqué, en métal fritté ou par formage à froid d'acier ou d'autres métaux aptes au glissement, mais ils peuvent également être constitués en acier recouvert d'une couche anti-friction en un métal plus malléable approprié, ou en matière plastique telle que le "Nylon". L'épaisseur des coussinets peut être importante, car ils ne doivent satisfaire à aucune caractéristique élastique particulière.

Par ailleurs, dans le cas où des aiguilles sont interposées entre les segments de roulement 310 et les demi-coussinets (600, 414, 601,...), les particularités prévues par la présente addition permettent une répartition équitable des charges sur les aiguilles, indépendamment du couple à transmettre.

Dans toutes les formes de réalisation mentionnées ci-dessus, la fiabilité de fonctionnement des coussinets est assurée et les risques de rupture de ceux-ci lorsque le joint homocinétique est sous angularité maximum sont donc écartés, grâce à l'indexage des demi-coussinets sur leurs axes de symétrie.

**Revendications**

1. Joint de transmission homocinétique, comportant un organe mâle susceptible d'être entraîné en rotation par un arbre menant (AM) et pourvu de bras radiaux (340) sur chacun desquels est monté un élément de roulement (310) emprisonné dans une paire de chemins de roulement (R) ménagés dans un organe femelle (312) solidaire en rotation d'un arbre mené, des coussinets élastiques expansibles dans une direction perpendiculaire à l'axe (ZZ') du bras radial (340) et coaxiale à l'axe de symétrie (YY') des coussinets (600, 601, 603, ...) interposés entre les bras radiaux (340) et les éléments de roulement (310) et chaque élément de roulement étant constitué par deux secteurs séparés (310) coopérant chacun avec un chemin de roulement (R), dans lequel chaque coussinet est formé par deux demi-coussinets semi-cylindriques et équipés de moyens (410, 415, ...) de solidarisation axiale et en rotation avec le bras associé (340) pourvu de moyens complémentaires (370, 390) aptes à coopérer avec lesdits moyens de solidarisation, ces demi-coussinets pouvant s'expanser radialement par pincement entre leurs extrémités du bras sur lequel ils sont montés, caractérisé en ce que chaque demi-coussinet (600, 601, ...) est pourvu d'un plot (410, 327, 415, 610, ...) d'indexage sur le bras associé (340), situé intérieurement audit demi-coussinet sur son axe de symétrie (YY'), et sollicité par un organe de rappel élastique (390) des demi-coussinets vers leur position expansée.

2. Joint de transmission selon la revendication 1, caractérisé en ce que chaque plot (410, 415, 610, ...) est soudé sur la surface intérieure du demi-coussinet (600, 414, 604, ...) associé dans la zone centrale de celui-ci, et engagé à coulisse dans un alésage (370) du bras (340) ménagé perpendiculairement à l'axe (ZZ') de ce dernier et coaxial à l'axe de symétrie (YY') des demi-coussinets.

3. Joint selon la revendication 2, caractérisé en ce que les plots d'indexage sont massifs (415, 602) ou en forme de godets (410, 327, 608, 610, 613) ouverts en direction de l'alésage (370), et soudés par leurs bases aux demi-coussinets (600; 603; 606, 607; 604, 605) suivant des surfaces annulaires (612) ou par une excroissance centrale (615).

4. Joint selon l'une des revendications 1 à 3, caractérisé en ce que les plots (410, 610, 415, ...) présentent une surface latérale sphérique (611, 614) ou cylindrique (420).

5. Joint selon les revendications 1 et 4, caractérisé en ce que chaque plot (602, 327) fait partie intégrante du demi-coussinet (601, 603), et peut être massif (602) ou en forme de godet (327).

6. Joint selon l'une des revendications 1 à 5, caractérisé en ce que les plots d'indexage (410, ...), réalisés en un métal, apte au glissement, sont recouverts d'une couche anti-friction malléable, métallique ou en matière plastique.

7. Joint selon l'une des revendications 1 à 6, caractérisé en ce que les extrémités en vis-à-vis de deux demi-coussinets (606, 607) montés sur un même bras (340) sont profilées de manière à s'emboîter mutuellement en délimitant des surfaces de guidage, par exemple des entailles complémentaires en créneaux (609) et languettes (617), ou en chevrons (618, 619).

8. Joint selon l'une des revendications 1 à 7, caractérisé en ce que dans chaque bras radial (340) de l'organe mâle (T), est ménagé un passage axial (341) communiquant au centre dudit organe mâle avec les autres perçages (341), ou un alésage axial borgne (328), dimensionné de façon que l'épaisseur de la paroi (331) du bras (340) soit telle que l'accroissement du rayon de courbure sous charge (P) de cette paroi (331) corresponde à l'augmentation du rayon de courbure du segment de roulement (310).

9. Outillage de fabrication de demi-coussinets (603) conformes à la revendication 1 et dont les plots (327) sont évidés en forme de godets, comprenant une matrice (400) présentant une entaille (422) à fond cylindrique et un poinçon (323) de filage à froid d'une ébauche (321), caractérisé en ce que le poinçon (323) présente un contour cylindrique conjugué dans lequel est formé un évidement annulaire central (342) complémentaire de la configuration du plot (327) à filer, placé en appui dans l'entaille (422) de la matrice (400).

**Claims**

1. A homokinetic transmission joint comprising a male element capable of being driven in rotation by a driving shaft (AM) and provided with radial arms (340), on each one whereof, there is mounted a rolling element (310) trapped in a pair of races (R) arranged in a female element (312) fixed for rotation to a driven shaft, elastic bushings expansible in a direction perpendicular to the axis (ZZ') of the radial arm (340) and coaxial with the axis of symmetry (YY') of the bushings (600, 601, 603...) interposed between the radial arms (340) and the rolling elements (310), and each rolling element being constituted by two separate segments (310) each cooperating with a race (R), wherein each bushing is formed by two semi-cylindrical half-bushings and provided with means (410, 415...) for axial and rotational fixing to the associated arm (340) which is provided with complementary means (370, 390) capable of cooperating with the said fixing means, these half-bushings being capable to. radial expansion by being squeezed between their ends by the arm whereon they are mounted, charcaterised in that each half-bushing (600, 601...) is provided with a stud (410, 327, 415, 610...) for locating it on the associated arm (340), situated inside the said half-bushing on its axis of symmetry (YY'), and urged by an elastic member (390) for restoring the half-bushings towards their expanded position.

2. A transmission joint according to claim 1, characterised in that each stud (410, 415, 610...) is welded to the inner surface of the associated half-bushing (600, 414, 604) in the central zone of the latter, and is slidably engaged in a bore (370) of the arm (340) arranged perpendicular to the axis (ZZ') of the latter and coaxial with the axis of symmetry (YY') of the half-bushings.

3. A joint according to claim 2, characterised in that the locating studs are solid (415, 602) or cup-shaped (410, 327, 608, 610, 613), open towards the bore (370) and welded at their bases to the half-bushings (600; 603; 606, 607; 604, 605) along annular surfaces (612) or at a central projection (615).

4. A joint according to one of claims 1 to 4, characterised in that the studs (410, 610, 415 ...) have a spherical lateral surface (611, 614) or a cylindrical one (420).

5. A joint according to claims 1 and 4, characterised in that each stud (602, 327) forms an integral part of the half-bushing (601, 603) and can be solid (602) or cup-shaped (327).

6. A joint according to one of claims 1 to 5, characterised in that the locating studs (410), made of a metal susceptible to sliding, are covered by a malleable metallic anti-friction layer, or made of a plastic material.

7. A joint according to one of claims 1 to 6, characterised in that the facing ends of two half-bushings (606, 607) mounted on the same arm are shaped so as to fit together, defining guide surfaces, for example complementary cut outs in the form of slots (609) and tongues (617), or chevrons (618, 619).

8. A joint according to one of claims 1 to 7, characterised in that in each radial arm (340) of the male element (T) there is arranged an axial passage (341) communicating at the centre of the said male element with the other holes (341), or a blind axial bore (328) dimensioned so that the thickness of the wall (331) of the arm (340) should be such that the increase in the radius of curvature of this wall (331) under the load (P) should correspond to the increase in the radius of curvature of the rolling segment (310).

9. Equipment for manufacturing half-bushings (603) according to claim 1, and the studs (327) whereof are hollowed out in the shape of cups, comprising a die (400) having a recess (422) with a cylindrical bottom and a punch (323) for the cold forming of a blank (321), characterised in that the punch (323) has a conjugate cylindrical contour wherein there is formed a central annular cut out (324), complementary to the configuration of the stud (327) to be formed, placed to bear in the cutout (422) of the die (400).

**Patentansprüche**

1. Homokinetisches Übertragungsgelenk mit einem männlichen Teil, das durch eine Antriebswelle (AM) drehend antreibbar ist und mit radialen Armen (340) auf denen jeweils ein in zwei Abrollbahnen (R) eingefasstes Rollelement (310) montiert ist, die in einem drehfest mit einer Abtriebswelle verbundenen weiblichen Teil (312) angeordnet sind, mit elastischen Lagern, die senkrecht zur Achse (ZZ') der radialen Arme (340) und koaxial zur Symmetrieachse (YY') der zwischen den radialen Armen (340) und den Rollelementen (310) angeordneten Lagern (600, 601, 603...) dehnbar sind, und wobei jedes Rollelement aus zwei getrennten Bogenstücken (310) besteht, welche jeweils mit einer Abrollbahn (R) zusammenwirken, in der jedes Lager durch zwei halbzylindrische Halbschalen gebildet ist und die Mittel (410, 415) zur axialen Verbindung aufweisen und mit dem zugehörigen Arm (340) drehend verbunden sind, welcher zusätzliche Mittel (370), 390) zum Zusammenwirken mit den Verbindungselementen aufweist, wobei die Halbschalen sich radial ausdehnen können, indem der Arm an dem sie befestigt sind zwischen ihren äußeren Enden zusammengedrückt wird, dadurch gekennzeichnet, daß jede Halbschale (600, 601...) einen Indexierschuh (410, 327, 415, 610...) an dem zugehörigen Arm (340) aufweist, der innerhalb der Halbschalen auf deren Symmetrieachse (YY') angeordnet ist und durch ein elastisches Rückstellorgan (390) der Halbschalen in deren Ausdehnungsposition gedrückt wird.

2. Übertragungsgelenk nach Anspruch 1, dadurch gekennzeichnet, daß jeder Schuh (410, 415, 610...) im mittleren Bereich des Halblagers (600, 414, 604...) an dessen Innenfläche angeschweißt ist, und verschiebbar in einer Bohrung (370) des Arms (340) eingreift, senkrecht zu dessen Achse (ZZ') und koaxial zur Symmetrieachse (YY') der Halbschalen angeordnet ist.

3. Übertragungsgelenk nach Anspruch 2, dadurch gekennzeichnet, daß die Indexierschuhe massiv (415, 602) oder in Form von zu den Bohrungen (370) hin offenen Bechern (410, 327, 608, 610, 613) ausgebildet sind, und den Ringflächen (612) folgend mit ihren Grundflächen oder mit einem mittleren Vorsprung (615) an den Halbschalen (600; 603; 606, 607; 604, 605) angeschweißt sind.

4. Übertragungsgelenk nach einem der Ansprüche 1 bis 3, dadurch gekennzeichnet, daß die Schuhe (410, 610, 415...) eine kugelförmige (611, 614) oder zylindrische Seitenfläche (420) aufweisen.

5. Übertragungsgelenk nach den Ansprüchen 1 und 4, dadurch gekennzeichnet, daß jeder Schuh (602, 327) einstückiger Bestandteil des Halblagers (601, 603) ist und massiv (602) oder als Becher (327) ausgebildet sein kann.

6. Übertragungsgelenk nach einem der Ansprüche 1 bis 5, dadurch gekennzeichnet, daß die aus einem gleitfähigen Metall bestehenden Indexierschuhe (410...) mit einer streckbaren Antifriktionsschicht aus Metall oder Kunststoff versehen sind.

7. Übertragungsgelenk nach einem der Ansprüche 1 bis 6, dadurch gekennzeichnet, daß die einander gegenüberliegenden Enden zweier an dem selben Arm (340) befestigten Halbschalen (606, 607) derart profiliert sind, daß sie unter Begrenzung von Führungsflächen ineinander eingreifen, zum Beispiel durch komplementäre Einschnitte mit Aussparungen (609) und Zapfen (617) oder in Pfeilform (618, 619).

8. Übertragungsgelenk nach einem der Ansprüche 1 bis 7, dadurch gekennzeichnet, daß in jedem radialen Arm (340) des männlichen Teils (T) ein axialer Durchgang (341), der das Zentrum des männlichen Teils (T) mit den anderen Bohrungen (341) verbindet, oder eine axiale Blindbohrung (328) vorgesehen ist, die derart dimensioniert ist, daß die Dicke der Wand (331) des Arms (340) so ist, daß die Zunahme des Krümmungsradius der Wand (331) unter Belastung (P) der Zunahme des Krümmungsradius des Rollsegments (310) entspricht.

9. Werkzeug zur Herstellung von Halbschalen (603) nach Anspruch 1, deren Schuhe (327) becherförmig ausgehöhlt sind, mit einer Matritze (400), die eine Zylinderkerbe (422) und einen Kaltfließpressstempel (323) für einen Rohling (321) aufweist, dadurch gekennzeichnet, daß der Stempel (323) eine verbundene zylindrische Form aufweist, in der eine ringförmige zentrale Aussparung (324) ausgebildet ist, welche der Form des zu pressenden Schuhs (327) entspricht, der in der Vertiefung (422) der Matritze (400) abgestützt ist.

EP 0 239 427 B1

# FIG.1

FIG.3

FIG.4

FIG.2

FIG.5

340
316
420
414
415
416
370

y ————— y'

FIG.6

VII
601
602

FIG.7

VI
601
602

FIG.8

IX →

321

325

326

323

324

422

603

327

400

IX →

FIG.9

325

323

327

603

400

FIG.10

603

327

FIG.11

321'

321

EP 0 239 427 B1

EP 0 239 427 B1

FIG.13

614
613
605
615
370
y
y'
340

FIG.12

604
611
610
612
370
y
y'
340

EP 0 239 427 B1

## FIG.14

606

607

608

609

617

617

609

608

## FIG.15

606'

607'

608

619

618

608

EP 0 239 427 B1

FIG.16

FIG.17